Europäisches Patentamt

(19) European Patent Office

Office européen des brevets

(11) Publication number: **0 146 640**
**B1**

(12) EUROPEAN PATENT SPECIFICATION

(45) Date of publication of patent specification: **23.11.88**

(51) Int. Cl.⁴: **G 01 P 13/00**

(21) Application number: **84902536.6**

(22) Date of filing: **20.06.84**

(86) International application number:
**PCT/JP84/00322**

(87) International publication number:
**WO 85/00228 17.01.85 Gazette 85/02**

(54) PERIOD DETECTION CIRCUIT.

(30) Priority: **21.06.83 JP 111690/83**

(43) Date of publication of application:
**03.07.85 Bulletin 85/27**

(45) Publication of the grant of the patent:
**23.11.88 Bulletin 88/47**

(84) Designated Contracting States:
**BE CH DE FR GB LI**

(56) References cited:
**CH-A- 455 868**
**JP-A-52 125 372**
**JP-A-53 021 718**
**JP-A-57 077 969**
**JP-B-51 040 818**
**US-A-3 760 189**
**US-A-3 980 960**

**PATENTS ABSTRACTS OF JAPAN, vol. 6, no. 72 (E-105)950r, 7th May 1982; & JP - A - 57 11 528 (KOMATSU SEISAKUSHO K.K.) 21-01-1982**

(73) Proprietor: **COCO RESEARCH INC.**
**Daiichi Maruzen Bldg. 16-12, Nishishinjuku 6-chome**
**Shinjuku-ku Tokyo 160 (JP)**

(72) Inventor: **YAMAGATA, Yasufumi**
**Sutohku Shinjuku 703 12-7, Nishishinjuku 6-chome**
**Shinjuku-ku Tokyo 160 (JP)**

(74) Representative: **Tetzner, Volkmar, Dr.-Ing. Dr. jur.**
**Van-Gogh-Strasse 3**
**D-8000 München 71 (DE)**

Courier Press, Leamington Spa, England.

## Description

This invention relates to a period detecting circuit according the preample of the claim. The prior art according the preample of the claim is shown by US—A—3 760 189, US—A—3 743 940 and DE—A—2 154 829.

When the revolution speed of a mechanical apparatus, such as a belt conveyor is detected, the period of a pulse generated from a pulse generator which generates a pulse with a period responsive to the revolution speed usually is converted to a voltage which is indicated by an indicator of a tachometer.

In this case, however, when the revolution speed becomes low, the period of the pulse from the pulse generator becomes long so that the indicating needle of the indicating instrument of the tachometer is vibrated and hence it becomes difficult to read the indication accurately. If a capacitor with large capacitance is used to avoid such shortcoming, the response speed of the tachometer is lowered.

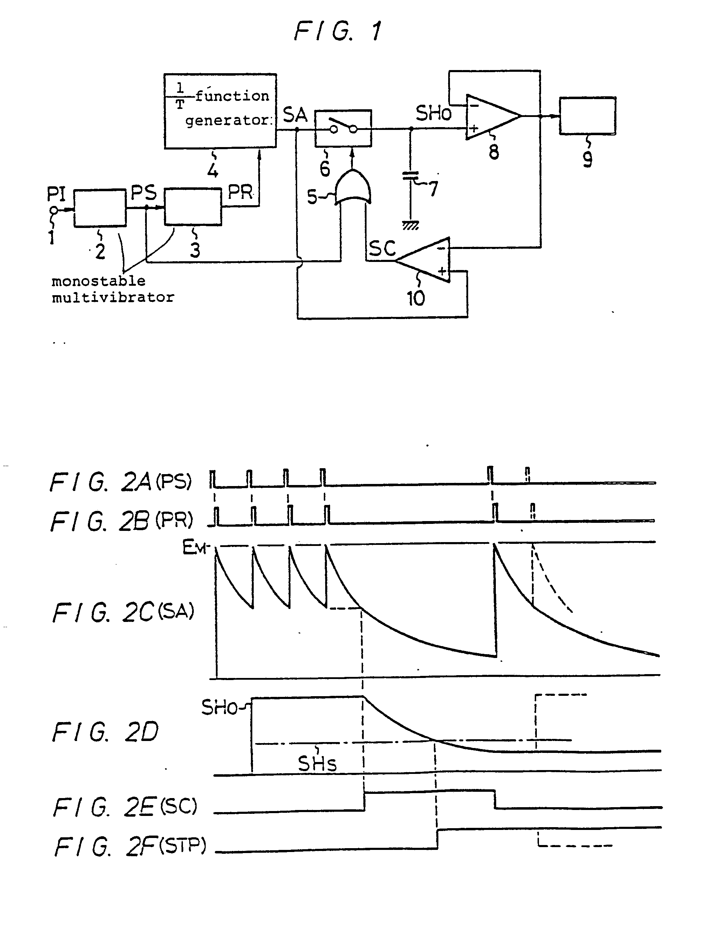

Fig. 1 shows an example of the above cited prior art. In the figure, reference numeral 1 designates an input terminal and through this input terminal 1, an input a pulse train PI with the period corresponding to a revolution speed and derived from a pulse generator is supplied to a monostable multivibrator 2 from which a first output pulse train PS (Fig. 2A) synchronized with the input pulse train PI is derived. This pulse train PS is supplied to a monostable multivibrator 3 from which a second output pulse train PR (Fig. 2B), which is delayed from the pulse train PS a little, is derived. The pulse train PR is supplied to a 1/T (T is the period) function generator 4 as a reset pulse thereof. Derived from this 1/T function generator 4 is a variable signal SA of downward sawtooth waveform (Fig. 2C) which becomes a predetermined voltage $E_M$ at a time when the function generator is reset by the pulse train PR and which is lowered from the voltage $E_M$ in a hyperbola fashion in accordance with the period T of the input pulse train PI from this time to the arrival of the succeeding reset pulse. Accordingly, at a time immediately before the function generator is reset by the pulse train PR, this variable signal SA, namely, the crest value of the downward sawtooth wave in the figure is equal to the voltage corresponding to the period of the input pulse train PI.

The variable signal SA from this function generator 4 is supplied to a sampling gate circuit 6. Then, the pulse train PS from the monostable multivibrator 2 is supplied through an OR gate 5 to the sampling gate circuit 6 whereby the variable signal SA is sampled by the pulse train PS and the sampled voltage thereof is stored in a capacitor 7. Since the pulses of the pulse train PS occur just before the pulses of the pulse train PR, the output sampled by the gate circuit 6 is the downward peak value voltage of the variable signal SA which corresponds to the period of the input pulse train PI as mentioned before. This voltage is stored in the capacitor 7. The output signal $SH_O$ (shown by a solid line in Fig. 2D) stored in the capacitor 7 is supplied through a buffer amplifier 8 to an indicating instrument 9. Accordingly, the needle of the indicating instrument 9 becomes corresponding to the output signal $SH_O$.

Further, the output from the buffer amplifier 8 is supplied to a comparing circuit 10, while the output (variable signal SA) from the function generator 4 is also supplied to the comparing circuit 10 which produces a compared output SC (Fig. 2E) which becomes a high level when the variable signal SA becomes lower than the output signal $SH_O$. This compared output is supplied through the OR gate 5 to the sampling gate circuit 6 so that during the period in which the output SC is at high level, the gate circuit 6 is opened, thus the output signal $SH_O$ of the capacitor 7 being changed along the variable signal SA in the hyperbolic fashion as shown by the solid line in Fig. 2D. The output SC of the comparing circuit 10 becomes high level when the revolution speed is lowerd and the period of the input pulse train PI becomes long. Consequently, according to the circuitry shown in Fig. 1, the needle of the indicating instrument 9 is never vibrated when the revolution speed is lowered and the period of the pulse train PI becomes long but the amplitude of its needle is changed sequentially following to the lowering of the revolution speed, so that the ultra-low speed can be detected excellently. When the above period detecting circuit however, is used as a stop detecting circuit, the following defect occurs.

In the circuitry of Fig. 1, as the revolution speed is lowered and the period T becomes long, the variable signal SA is lowered in the hyperbolic fashion and the output signal $SH_O$ obtained across the capacitor 7 becomes corresponding thereto. If the input pulse train PI is received when the revolution speed is lowered as shown in Fig. 2, the output signal $SH_O$ of the capacitor 7 is held as a low voltage which substantially corresponds to the peroid T at that time and this voltage is indicated by the needle of the indicating instrument 9.

If the incoming pulse is received without failure, there occurs no problem. However, when the revolution is suddenly stopped and no input pulse train PI is received the output signal $SH_O$ follows the hyperbolic lowering of the variable signal SA from the function generator 4. Since the voltage following this hyperbolic lowering produces an output in the shape of an asymptotic line in practice, although the revolution or the like is stopped suddenly, the amplitude of the needle does not become zero which is inconvenient for detecting the stop of the revolution.

It is, therefore, the object of this invention to provide a period detecting circuit which is capable of excellently detecting a low speed and the stop of the revolution.

According to this invention the object is solved by the characterizing features of the claim.

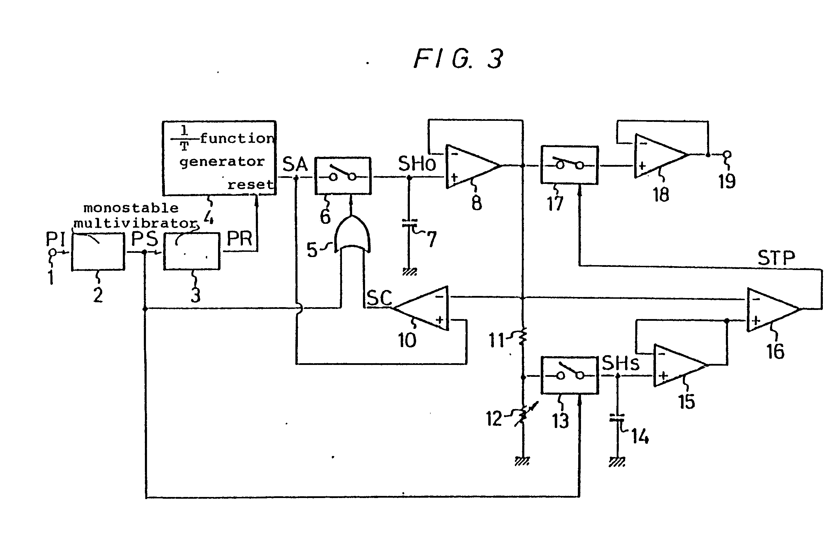

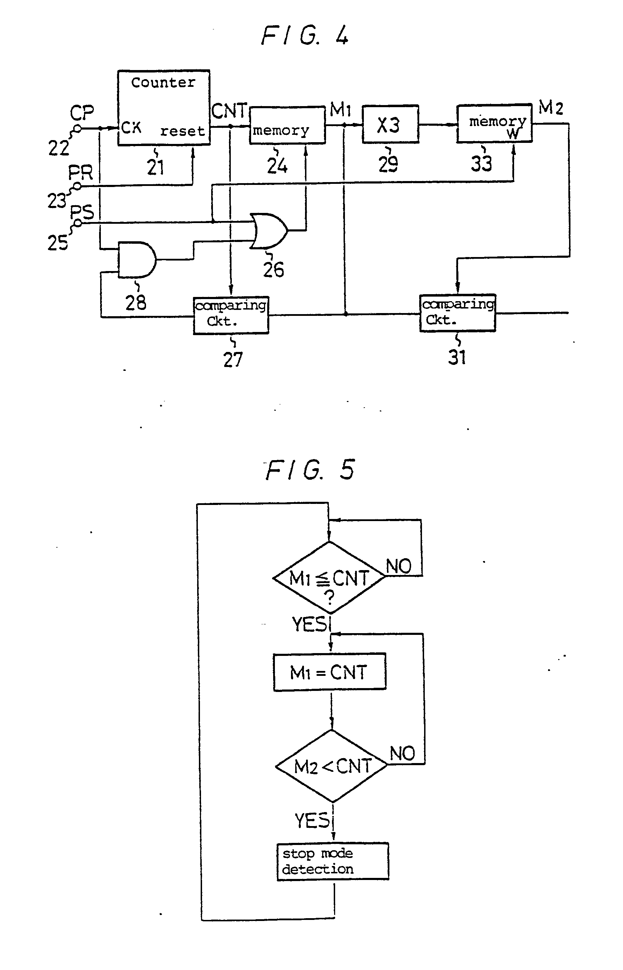

Fig. 1 is a systematic block diagram showing an example of a prior art period detecting circuit, Fig. 2 is a waveform diagram useful for the explanation thereof and useful for explaining an embodiment of this invention, Fig. 3 is a systematic block diagram showing an embodiment of a period detecting circuit according to this invention, Fig. 4 is a systematic block diagram showing another embodiment of this invention and Fig. 5 is a flow chart showing the operation of a main part thereof.

Fig. 3 illustrates an embodiment of the present invention and in this embodiment, a stop mode detecting circuit section is added to the period detecting circuit shown in Fig. 1.

In this embodiment, the output from the buffer amplifier 8 is divided in voltage by resistors 11 and 12. For example, the resistor 12 is adjusted and the voltage produced at the connection point between the resistors 11 and 12 is set as 1/2 to 1/5 the output voltage value of the buffer amplifier 8, namely to the value corresponding to the case that the period of the input pulse train PI is suddenly changed and becomes three to five times that of the preceding stable state. This value of voltage is supplied to a sampling gate circuit 13 and is sampled by the output pulse train PS in this gate circuit 13, thus the sampled value being stored in a capacitor 14. The output signal SHS (shown by a one-dot chain line in Fig. 2D) stored in this capacitor 14 is supplied through a buffer amplifier 15 to a comparing circuit 16. This comparing circuit 16 is also supplied with the output of the buffer amplifier 8. Then, the comparing circuit 16 produces a stop mode detection output signal STP (Fig. 2F) which becomes high level when the output voltage stored in the capacitor 7 becomes lower than the output voltage SHS stored in the capacitor 14. In other words, this output signal STP becomes high level when the period of the input pulse train PI becomes suddenly long in which the subject to be detected can be regarded as in the state of the sudden stop mode.

In this embodiment, when the stop mode detection is carried out, the needle of the indicating instrument is made to indicate zero. To this end, the output of the buffer amplifier 8 is supplied through a switching circuit 17 to a buffer amplifier 18. An output terminal 19 is led out from this buffer amplifier 18 and the signal developed at this output terminal 19 is supplied to the indicating instrument. On the basis of the output signal STP from the comparing circuit 16, the switching circuit 17 is controlled such that when the stop mode detection is carried out and the output signal STP becomes high level, the switching circuit 17 is turned off.

After the stop mode detecting output signal STP becomes high level which means that the stop mode detection is carried out, when the speed of the subject to be detected is increased and then restored to the original speed, as shown by a broken line in Fig. 2, an input pulse train of short period is received, as will be clear from Fig.

2, the voltage across the capacitor 7 is immediately increased. As a result, the output signal STP is lowered to the low level so that the switching circuit 17 is turned on and thereafter, the period detection is carried out exactly similarly to the stationary state.

Further, the signal developed at the output terminal 19 is not always supplied to the indicating instrument but may be used as one input to a computer which controls the operation of the mechanical apparatus which is, for example, the subject to be detected.

The embodiment shown in Fig. 3 is constructed in an analog fashion but this invention can be constructed digitally.

More particularly, the above operation of this invention can be carried out by using, for example, a microcomputer in the software processing. To simplify the explanation, an example of the digital construction will be described with reference to the hardware of Fig 4 and the flow chart of the main part thereof.

In Fig. 4, reference numeral 21 designates a counter which is used as the function generator for detecting the period. A clock pulse CP with the frequency enoughly higher than that of the incoming pulse train PI is supplied through a terminal 22 to the clock terminal thereof. As described before, the output pulse train PR sychronized with the incoming pulse train PI and having the same period is supplied through a terminal 23 to the reset terminal of this counter 21. Accordingly, the counted value of this counter 21 becomes corresponding to the duration of the period of the pulse train PR. The counted value output CNT of the counter 21 is supplied to a memory 24 and the output pulse train PS which is immediately before the output pulse train PR is applied from a terminal 25 through an OR gate 26 to this memory 24 such that the count value at the time point of this pulse train PS, accordingly at the time point just before the counter is reset by the pulse train PR is stored in the memory 24. The stored value $M_1$ in the memory 24 is supplied to a comparing circuit 27 and then compared with the output counted value CNT of the counter 24. When $M_1 \leqq CNT$ is established an AND gate 28 is opened by the output from this comparing circuit 27 so that the clock pulse CP is derived through this AND gate 28. This clock pulse is supplied through the OR gate 26 to the memory 24 such that the content of the memory 24 is sequentially re-written into the count value CNT on the basis of the clock pulse CP.

The stored value in the memory 24 thus obtained corresponds to the output value of the capacitor 7 shown in Figs. 1 and 3.

The stored value in this memory 24 is supplied to a multiplying circuit 29 in which this value is multiplied for example, three times. The three times value is stored in a memory 33 on the basis of the pulse train PS. Accordingly, the stored value $M_2$ in the memory 33 corresponds to the value which is provided when the period of the input pulse train suddenly becomes three times.

The stored value $M_2$ in the memory 33 and the stored value $M_1$ in the memory 24 are compared with each other in a comparing circuit 31. When

$$M_2 < M_1 (=CNT)$$

is established, the stop mode detecting signal is produced from the comparing circuit 31.

Fig. 5 is a flow chart showing that the period of the input pulse train becomes longer than the preceding period and the stored value $M_1$ in the memory 24 follows the counted value CNT of the counter 24 and in addition, when the period becomes longer more than three times, the step mode detection is carried out.

**Claim**

A period detecting circuit to which is supplied an input pulse train (PI) to be measured and producing an output corresponding to its period comprising:

a) multi-vibrator means (2, 3) for receiving said input pulse train to be measured and generating first and second output pulse trains (PS, PR), the first output pulse train (PS) being sychronized with the input pulse train (PI), the second output pulse train (PR) being delayed from the first output pulse train (PS);

b) function generator means (4) controlled by said second output pulse train (PR) for generating a variable signal (SA) corresponding to the period of pulses of said input pulse train;

c) first sampling gate means (6) for sampling said variable signal (SA) by pulses of said first output pulse train (PS); and

d) first memory means (7) for storing the output signal ($SH_0$) from said first sampling gate means (6); characterised by

e) dividing means (11, 12) for dividing said variable signal by a predetermined value greater than one;

f) second sampling gate means (13) for sampling the output signal from said dividing means (11, 12) by pulses of said first output pulse train (PS);

g) second memory means (14) for storing the output signal (SHS) from said second sampling gate means (13); and

h) comparing means (16) for comparing the signals stored in said first and second memory means (7, 14) and for producing a stop mode detection output signal (STP) when the signal stored in said first memory means means (7) becomes lower than the signal stored in said second memory means (14).

**Patentanspruch**

Zur Ermittlung einer Periodendauer bestimmte Schaltungsanordnung, der ein zu messender Eingangsimpulszug (PI) zugeführt wird und der ein Ausgangssignal entsprechend der Periodendauer dieses Eingangsimpulszuges erzeugt, enthaltend:

a) Multivibratoren (2, 3) zum Empfang dieses zu messenden Eingangsimpulszuges und zur Erzeugung eines ersten und einen zweiten Ausgangsimpulszuges (PS, PR), wobei der erste Ausgangsimpulszug (PS) mit dem Eingangsimpulszug (PI) synchronisiert ist, während der zweite Ausgangsimpulszug (PR) gegenüber dem ersten Ausgangsimpulszug (PS) verzögert ist,

b) einen von dem zweiten Ausgangsimpulszug PR gesteuerten Funktionsgenerator (4) zur Erzeugung eines veränderlichen Signales (SA) entsprechend der Periodendauer der Impulse des Eingangsimpulszuges,

c) eine erste Abtasttorschaltung (6) zur Abtastung des veränderlichen Signals (SA) mit Impulsen des ersten Ausgangsimpulszuges (PS),

d) einen ersten Speicher (7) zur Speicherung des Ausgangssignales ($SH_0$) der ersten Abtasttorschaltung (6), gekennzeichnet durch

e) einen Teiler (11, 12) zur Teilung des veränderlichen Signales durch einen vorbestimmten Wert größer als 1,

(f) eine zweite Abtasttorschaltung (13) zur Abtastung des Ausgangssignales des Teilers (11, 12) mit Impulsen des ersten Ausgangsimpulszuges (PS),

g) einen zweiten Speicher (14) zur Speicherung des Ausgangssignales SHS der zweiten Abtasttorschaltung (13)

h) sowie eine Vergleichsschaltung (16) zum Vergleich der im ersten und zweiten Speicher (7, 14) gespeicherten Signale und zur Erzeugung eines den Stillstand kennzeichnenden Ausgangssignales (STP), wenn das im ersten Speicher (7) gespeicherte Signal kleiner als das im zweiten Speicher (14) gespeicherte Signal wird.

**Revendication**

Circuit de détection de période auquel un train d'impulsions d'entrée (PI) est fourni pour être mesuré et qui produit une sortie correspondant à sa période, comprenant:

a) des miyens multivibrateurs (2, 3) destinés à recevoir ledit train d'impulsions d'entrée devant être mesuré et générant un premier et un second trains d'impulsions de sortie (PS, PR), le premier train d'impulsions de sortie (PS) étant synchronisé sur le train d'impulsions d'entrée (PI), le second train d'impulsions de sortie (PR) étant retardé par rapport au premier train d'impulsions de sortie (PS);

b) un moyen générateur de fonction (4) commandé par ledit second train d'impulsions de sortie (PR) pour générer un signal variable (SA) correspondant à la période des impulsions dudit train d'impulsions d'entrée;

c) un premier moyen à porte d'échantillonnage (6) servant à l'échantillonnage dudit signal variable (SA) à l'aide des impulsions dudit premier train d'impulsions de sortie (PS); et

d) un premier moyen de mémoire (7) servant à mémoriser le signal de sortie ($SH_0$) provenant dudit premier moyen à porte d'échantillonnage (6); caractérisé par e) des moyens de division (11, 12) servant à diviser ledit signal variable par une valeur prédéfinie supérieure à un;

f) un second moyen à porte d'échantillonnage (13) servant à l'échantillonnage du signal de sortie desdits moyens de division (11, 12) à l'aide d'impulsions audit premier train d'impulsions de sortie (PS);

g) un second moyen de mémoire (14) servant à mémoriser le signal de sortie (SHS) provenant dudit second moyen à porte d'échantillonnage (13); et

h) un moyen de comparaison (16) servant à comparer les signaux mémorisés dans lesdits premier et second moyens de mémoire (7, 14) et à produire un signal de sortie (STP) de détection de mode arrêt lorsque le signal mémorisé dans ledit premier moyen de mémoire (7) devient inférieur au signal mémorisé dans ledit second moyen de mémoire (14).

FIG. 1

FIG. 2A (PS)
FIG. 2B (PR)
FIG. 2C (SA)
FIG. 2D
FIG. 2E (SC)
FIG. 2F (STP)

*FIG. 3*

## FIG. 4

## FIG. 5